# EUROPEAN PATENT APPLICATION

(11) **EP 4 628 200 A1**
(43) Date of publication of application: **08.10.2025**
(21) Application number: 24849495.7
(22) Date of filing: 26.07.2024
(51) Int. Cl.: B01F 27/95, B01F 27/85, B01F 27/1123, B01F 27/1125, B01F 27/96, B01F 27/806, H01M 4/02, B01F 101/59

(54) **HIGH-SHEAR MIXING APPARATUS**

(30) Priority: 28.07.2023 KR 20230098953
(71) Applicant: LG Energy Solution, Ltd., Seoul 07335 (KR)
(72) Inventor: KIM, Taegon, Daejeon 34122 (KR); LIM, Hanmin, Daejeon 34122 (KR); KIM, Jeonggil, Daejeon 34122 (KR); KIM, Myeongsoo, Daejeon 34122 (KR)
(74) Representative: Plasseraud IP
(86) International application number: PCT/KR2024/010888
(87) International publication number: WO 2025/028926

(57) **Abstract**

The present invention relates to a high shear mixing device comprising a first screw kneader and a second screw kneader, wherein each of screw kneaders rotates in opposite directions with the other screw kneaders and the blades overlapping each other, wherein one of the three blades provided in each of the first screw kneader and the second screw kneader is an open-type blade having through holes formed in the center except for the outer periphery of the rotation direction surface, and the other two blades are both closed-type blades having the rotation direction surface closed without a through hole, wherein the open-type blade provided in the first screw kneader is overlapped between the two closed-type blades provided in the second screw kneader, and wherein the open-type blade provided in the second screw kneader is overlapped between the two closed-type blades provided in the first screw kneader.

## Description

### [Technical Field]

The present invention relates to a high shear mixing device, particularly, a high shear mixing device used for preparing a dry electrode for a secondary battery.

This application claims the benefit of priority based on Korean Patent Application No. 10-2023-0098953, dated July 28, 2023, and all contents disclosed in the document of the Korean Patent Application are included as part of this specification.

### [Background Art]

The stirring device is used to finely mix various paste manufacturing facilities and chemical raw materials, such as inks, pigments, paints, cosmetics, pharmaceuticals and paints, various coatings, abrasives, ceramics or metal powder or various electronic materials (PZT, dielectric, MLCC, ferrite, display materials). As the stirring device, in particular, as equipment for stirring high-viscosity substances, a planetary mixer that stirs high-viscosity substances in a container using a blade and a rotor is widely used.

The planetary mixer as described above is also used to prepare an electrode for a secondary battery. That is, along with the expansion of the use or the development of the secondary battery, improvements in low resistance, high capacity, mechanical properties and productivity of the electrode are continuously required, and thus the need for high shear mixing of the mixture to prepare the electrode is also increasing.

Specifically, recently, a technology for preparing a dry electrode film by mixing an active material, a binder, and an electrically conductive material without a liquid medium such as a solvent or dispersion medium, and then passing the powder mixture through a rolling roll, is being actively developed, and high shear mixing has been applied to this preparation of the electrode.

That is, in the above method, a binder called "fiberizable binder" or "fiber-forming binder" is used. If high shear mixing is applied to the mixture containing the binder, the binder is micro-fiberized to adhere the active material and the electrically conductive material.

However, in this high shear mixing process, the fiberizable polymer becomes chewing gum-like state, and a high load is applied to the high shear mixing device, and thus the high shear mixing device is often damaged. Meanwhile, if the shear force is lowered to prevent damage to the equipment as described above, fiberization of the fiberizable polymer is not performed well. Accordingly, due to these problems, it is very difficult to constitute the high shear mixing device as a mass-production equipment for preparing a dry electrode for a secondary battery.

### [Prior Art Document]

### [Patent Document]

(Patent Document 1) Korean Laid-open Patent Publication No.10-2011-0117902

### [Disclosure]

### [Technical Problem]

The present invention has been devised to solve the above problems in the prior art, and it is an object of the present invention to provide a high shear mixing device capable of efficiently mixing materials without overload when mixing materials by high shear force.

In particular, it is an object of the present invention to provide a high shear mixing device capable of efficiently micro-fiberizing the polymer without overload during high shear mixing of a mixture for preparing a dry electrode comprising a fiberizable polymer as a binder.

### [Technical Solution]

In order to achieve the above object, the present invention provides a high shear mixing device comprising,
a first screw kneader and a second screw kneader;
a first rotation driving mechanism for rotating the first screw kneader and a second rotation driving mechanism for rotating the second screw kneader;
a revolution driving mechanism in which the first rotation driving mechanism and the second rotation driving mechanism are rotatably installed;
a driving mechanism body in which the revolution driving mechanism is installed; and
a mixing tank,
wherein each of the first screw kneader and the second screw kneader comprises a shaft whose one end is connected to the rotation driving mechanism; and three blades having one end fixed to the shaft and having a body spirally curved along a longitudinal direction of the shaft, and
wherein each of screw kneaders rotates in opposite directions with the other screw kneaders and the blades overlapping each other,
wherein one of the three blades provided in each of the first screw kneader and the second screw kneader is an open-type blade having through holes formed in the center except for the outer periphery of the rotation direction surface, and the other two blades are both closed-type blades having the rotation direction surface closed without a through hole,
wherein the open-type blade provided in the first screw kneader is overlapped between the two closed-type blades provided in the second screw kneader, and wherein the open-type blade provided in the second screw kneader is overlapped between the two closed-type blades provided in the first screw kneader

In one embodiment of the present invention, the high shear mixing device has a feature that the screw kneaders rotate by a rotation driving mechanism and revolve by the revolution driving mechanisms.

In one embodiment of the present invention, the through hole formed in each blade may be formed to extend to the outer peripheral surface of the shaft.

In one embodiment of the present invention, the rotation direction distal end of the blade provided in the first screw kneader and the second screw kneader 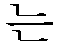 may be rotated while maintaining a separation distance of 1 mm to 10 mm from other screw kneaders.

In one embodiment of the present invention, the high shear mixing device is used for high shear mixing of a mixture for preparing a dry electrode containing a fiberizable polymer as a binder, and thus may be used for micro-fiberizing the fiberizable polymer.

### [Advantageous Effects]

The high shear mixing device of the present invention provides an effect capable of efficiently mixing materials without overload when mixing materials by high shear force. In addition, since damage to the device is minimized by this effect, it has a feature that it is possible to configure the device in a large capacity.

In particular, the high shear mixing device of the present invention provides an effect of efficiently micro-fiberizing the polymer without overload during high shear mixing of a mixture for preparing a dry electrode containing a fiberizable polymer as a binder.

### [Description of Drawings]

FIG. 1 is a perspective view showing one embodiment of a high shear mixing device of the present invention.
FIG. 2 is a perspective view showing one embodiment of a screw kneader provided in the high shear mixing device of the present invention.
FIG. 3 is a simplified drawing illustrating the overlapped structure of the screw kneader shown in FIG. 2.
FIG. 4 is a perspective view illustrating the overlapped structure of a screw kneader of the comparative example having a different overlapped structure from the screw kneader of the present invention.
FIG. 5 is a simplified diagram illustrating the overlapped structure of the screw kneader shown in FIG. 4.

### [Best Mode]

Hereinafter, examples of the present invention will be described in detail with reference to the accompanying drawings so that those of ordinary skill in the art can easily carry out the present invention. However, the present invention may be embodied in many different forms and is not limited to the examples described herein. Throughout the specification, like reference numerals are assigned to similar parts.

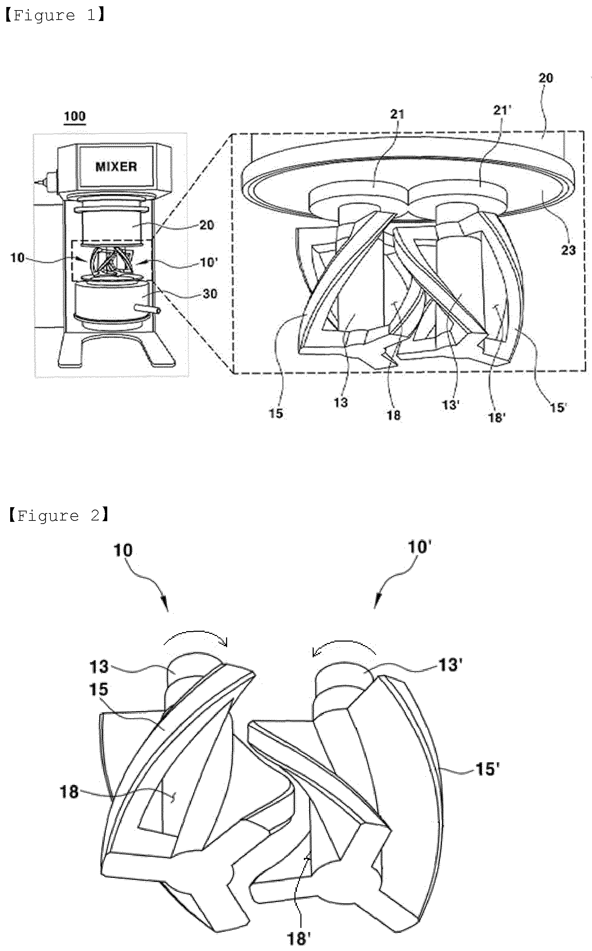

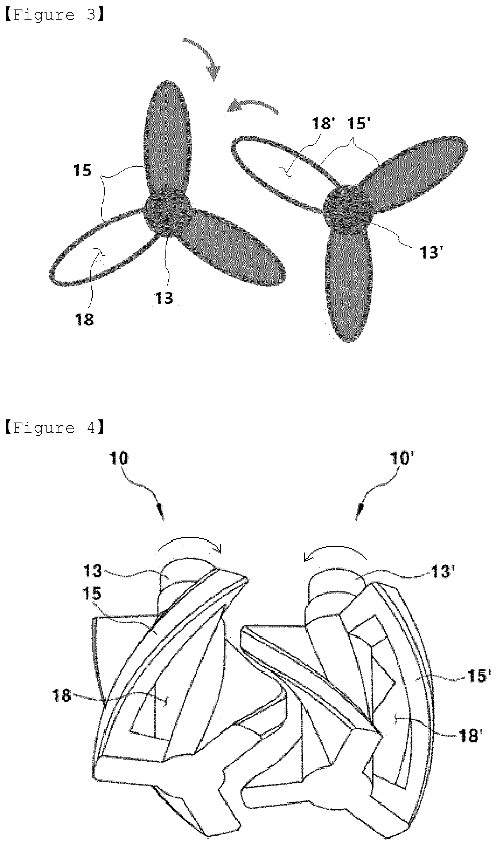

FIG. 1 is a perspective view showing one embodiment of a high shear mixing device 100 of the present invention, and FIG. 2 is a perspective view illustrating one embodiment of a screw kneader provided in the high shear mixing device of the present invention, and FIG. 3 is a simplified view of the overlapping structure of the screw kneader illustrated in FIG. 2.

The high shear mixing device 100 of the present invention, as shown in FIG. 1, comprises
the first screw kneader 10 and the second screw kneader 10'; the first rotation driving mechanism 21 for rotating the first screw kneader and the second rotation driving mechanism 21' for rotating the second screw kneader; the revolution driving mechanism 23 in which the first rotation driving mechanism 21 and the second rotation driving mechanism 21' are rotatably installed; the driving mechanism body 20 in which the revolution driving mechanism 23 is installed; and the mixing tank 30,
wherein each of the first screw kneader 10 and the second screw kneader 10' comprises shafts 13 and 13' whose one end is connected to the rotation driving mechanisms 21 and 21'; and three blades 15 and 15' having one end fixed to the shaft and having a spirally curved body along the longitudinal direction of the shaft, and
wherein each of the screw kneaders 10 and 10', as shown in Fig. 2, rotates in opposite directions with the other screw kneaders and blades 15 and 15' overlapping each other.

As shown in FIGs. 2 and 3, one of the three blades provided in each of the first screw kneader 10 and the second screw kneader 10' is an open-type blade having through holes 18, 18' formed in the center except for the outer periphery of the rotation direction surface, and the other two blades are both closed-type blades having the rotation direction surface closed without a through hole,
wherein the open-type blade provided in the first screw kneader is overlapped between the two closed-type blades provided in the second screw kneader, and wherein the open-type blade provided in the second screw kneader is overlapped between the two closed-type blades provided in the first screw kneader, as shown in FIGs. 2 and 3.

When the screw kneaders rotate and engage with each other, they are characterized by revolving in the opposite direction to the direction in which the mixtures are discharged.

The high shear mixing device 100 of the present invention may be particularly preferably used for preparing a dry electrode for a secondary battery. That is, when preparing a dry electrode for a secondary battery, the high shear mixing device produces a freestanding electrode through a process of high shear mixing the mixture comprising an active material, an electrically conductive material, and a fiberizable binder such as PTFE as a binder to fiberize the binder, and rolling the prepared mixture. During this high shear mixing process, the fiberizable polymer becomes chewing gum-like state and a high load is applied to the high shear mixing device, which often damages the equipment. On the other hand, if the shear force is lowered to prevent damage to the equipment as described above, fiberization of the fiberizable polymer is not performed well. Therefore, due to these problems, it is very difficult to constitute a high shear mixing device as a large-capacity mass-production equipment for preparing a dry electrode for a secondary battery.

However, if the high shear mixing device of the present invention is used, while the dispersibility of the mixture is greatly improved and the micro-fiberization of the fiberizable polymer is effectively achieved, there is no heavy load on the device. Therefore, the high shear mixing device of the present invention can be preferably used in high shear mixing for preparing a dry electrode for a secondary battery, and makes it possible to constitute a large-capacity mass-production equipment.

If the high shear mixing device of the present invention is used, while continuously applying a high-shear force of 10 to 500 N·m to the mixture comprising an active material, an electrically conductive material, and a fiberizable binder such as PTFE as a binder, it is possible to prepare the mixture for a freestanding electrode having good quality without damage to the equipment. In addition, in the case of rolling such mixture, a freestanding electrode having excellent tensile strength is prepared, and when a battery is constituted by such an electrode, the lifetime of the battery is greatly improved.

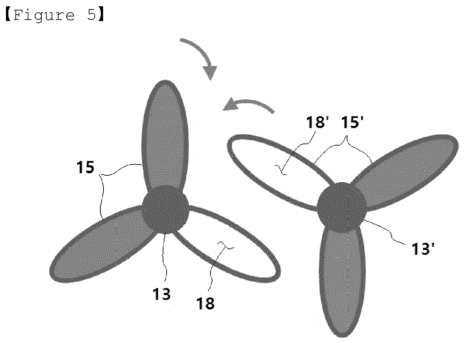

In particular, the inventors of the present invention have discovered that, as shown in FIGs. 4 and 5, if the open-type blade provided in the first screw kneader is overlapped between the open-type and closed-type blades provided in the second screw kneader, and the open-type blade provided in the second screw kneader is overlapped between the open-type and closed-type blades provided in the first screw kneader, the open-type blades overlap each other, so that the through holes 18, 18' overlap each other, and the material to be mixed passes through the through holes 18, 18' without being subjected to shear force, and thus the high shear mixing effect is deteriorated; and completed the present invention for improving this problem.

In other words, the inventors of the present invention have found that, as shown in FIGs. 2 and 3, if the open-type blade provided in the first screw kneader is overlapped between two closed-type blades provided in the second screw kneader, and the open-type blade provided in the second screw kneader is overlapped between two closed-type blades provided in the first screw kneader, the high shear mixing is maximized and the load applied to the high shear mixing device is reduced, and accordingly, when the electrode is manufactured using the mixture prepared by the high shear mixing device, the lifetime characteristic of the lithium secondary battery is improved, thereby completing the present invention.

In one embodiment of the present invention, one end of the body of the blades 15 and 15' is coupled to the shaft in a spiral shape in the longitudinal direction, and accordingly, the body surface in the rotational direction may have a shape that is spirally bent along the longitudinal direction of the shaft.

In the present invention, the body of the blades 15 and 15' may have a shape in which the body having a shape of a circular plate with one end cut off, an oval plate with one end cut off or a polygonal plate is spirally bent along the longitudinal direction of the shafts 13 and 13'. In the case of the circular plate and the oval plate, the cut-off portion may be coupled to the shaft in a spiral shape in the longitudinal direction, and in the case of the polygonal plate, one edge may be coupled to the shaft in a spiral shape in the longitudinal direction. In addition, the body may also have a shape in which the exemplified shape is partially modified to be advantageous for high shear mixing. If the body has the polygonal shape, it may be a polygonal shape such as a triangle, a quadrangle, a pentagon, and a hexagon, and is not particularly limited. However, a rectangular shape may be more preferably used.

In one embodiment of the present invention, the high shear mixing device 100 has a feature that the screw kneaders 10 and 10 ' rotate by the rotation driving mechanisms 21 and revolve by the revolution driving mechanism 23. In addition, when the screw kneaders rotate and engage with each other, they are characterized by revolving in the opposite direction to the direction in which the mixtures are discharged. As described above, if the screw kneaders rotate and revolve at the same time, the mixture is more uniformly mixed and high shear mixing can be performed more efficiently, which is preferable.

The through holes 18 and 18' formed in the blades 15 and 15' of the first screw kneader 10 and the second screw kneader 10' shown in FIG. 2 represent shapes in which a through hole is formed in the center except for the outer periphery of the rotation direction surface of the blade, and in particular, the shape represents a shape in which the through hole extends to the outer peripheral surface of the shaft.

In one embodiment of the present invention, the area of the through holes 18 and 18' may be formed to be 40 to 80%, more preferably 50 to 70% relative to the total area of the rotation direction surface of the blade body. If the through hole is formed within the above range, it is preferable because the mixture is effectively mixed without applying a high load to the device. In particular, within the above range, micro-fiberization of the fiberizable polymer can also be effectively achieved.

If the high shear mixing device comprises the first screw kneader (10) and the second screw kneader (10') shown in Figs. 2 and 3, the dispersibility of the mixture is greatly improved, and fiberization of a fiberizable polymer such as PTFE is effectively achieved. In addition, during the fiberization process of the fiberizable polymer such as PTFE, a large load is not applied to the device. Therefore, the high shear mixing device of the present invention can be preferably used in high shear mixing for preparing a dry electrode for a secondary battery, and makes it possible to constitute a large-capacity mass-production equipment.

In particular, if a dry freestanding electrode is prepared by high shear mixing the mixture comprising an active material, an electrically conductive material, and a fiberizable binder such as PTFE as a binder and rolling such mixture, the tensile strength of the freestanding electrode is greatly improved, and this dry freestanding electrode provides the effect of greatly improving the lifetime of the secondary battery.

In one embodiment of the present invention, it may be preferable that the rotation direction distal ends of the blades provided in the first screw kneader and the second screw kneader rotate while maintaining a separation distance of 1 mm to 10 mm, preferably 1 mm to 5 mm, more preferably 1 mm to 3 mm from other screw kneaders. When having the above separation distance, fiberization of a fiberizable polymer such as PTFE is effectively achieved, and the high shear mixing device is not subjected to a large load that may damage the device, and thus it is possible to efficiently prepare a freestanding electrode of good quality.

In one embodiment of the present invention, it is more preferable that the rotational speed of the first screw kneader and the second screw kneader is 10 rpm to 500 rpm, preferably 10 rpm to 300 rpm, more preferably 10 rpm to 150 rpm. If high shear mixing is performed at the above speed, fiberization of a fiberizable polymer such as PTFE is effectively achieved, the high shear mixing device is not subjected to a large load that may damage the device, and thus it is possible to efficiently prepare a freestanding electrode of good quality. In addition, revolution speed may be 5 rpm to 100 rpm, preferably 10 rpm to 50 rpm, more preferably 10 rpm to 30 rpm.

### MODE of the INVENTION

Hereinafter, the present invention will be described in detail by way of example in order to specifically explain the present invention. However, the examples according to the present invention may be modified in various other forms, and the scope of the present invention should not be construed as being limited to the examples described in detail below. The examples of the present invention are provided to more completely explain the present invention to those of ordinary skill in the art.

### Example 1: Preparation of freestanding electrodes by high shear mixing device

95.5 % by weight or 97 % by weight of NCM powder, which is particles of positive electrode active material with an average particle diameter of 10 *µ*m (Product name: GL80, LG Chem company), 1.5% by weight of Li250 (Denka company) as an electrically conductive material and PTFE as binder (1.5 % by weight or 3 % by weight) was mixed to prepare a mixture for a freestanding electrode.

The high shear mixing device of the present invention was constituted as shown in Table 1 below, and high shear mixing was performed for 2 minutes by applying a shear force of 100 N·m to the mixture at 90 °C at the rotation of 30 rpm and revolution of 15 rpm.

Next, the secondary mixture in the form of dough prepared above was milled at 100 °C with a two roll mill (MR-3, Inoue company) to prepare a free-standing film having a thickness of 200 *µ*m.

Thereafter, the free-standing film was placed on one side of a Primer Coated Aluminum Foil (Manufactured by Dongwon Systems company) current collector having a thickness of 20 *µ*m, and bonded through a lamination roll maintained at 120 °C to prepare a positive electrode.

**Table 1:**

| | Constitution of high shear mixing device | | | | | | Binder content (wt%) |
|---|---|---|---|---|---|---|---|
| | Shape of screw kneader | | | Arrangement of first and second screw blade | Rotation of screw kneader | Mixing volume | |
| Example 1 | first screw kneader | first blade is open-type (through hole formation) and second and third blades are closed-type | shape of FIGs. 2 and 3 | overlap | revolution + rotation | 1.5L | 1.5 |
| | second screw kneader | first blade is open-type (through hole formation) and second and third blades are closed-type | | | | | |
| Example 2 | first screw kneader | first blade is open-type (through hole formation) and second and third blades are closed-type | shape of FIGs. 2 and 3 | overlap | revolution + rotation | 1.5L | 3.0 |
| | second screw kneader | first blade is open-type (through hole formation) and second and third blades are closed-type | | | | | |
| Compara tive Example 1 | first screw kneader | first blade is open-type (through hole formation) and second and third blades are closed-type | shape of FIGs. 4 and 5 | overlap | revolution + rotation | 1.5L | 1.5 |
| | second screw kneader | first blade is open-type (through hole formation) and second and third blades are closed-type | | | | | |
| Compara tive Example 2 | first screw kneader | first blade is open-type (through hole formation) and second and third blades are closed-type | shape of FIGs. 4 and 5 | overlap | revolution + rotation | 1.5L | 3.0 |
| | second screw kneader | first blade is open-type (through hole formation) and second and third blades are closed-type | | | | | |

| | | | | | | | |
|---|---|---|---|---|---|---|---|
| (Note) Overlap: The rotation direction distal ends of the blades provided on the first screw kneader and the second screw kneader maintain a separation distance of 3 mm from the other screw kneaders | | | | | | | |

### Experimental Example 1: Measurement of tensile strength of freestanding electrode

The tensile strength of the freestanding electrodes prepared in Examples 1 to 2 and Comparative Examples 1 to 2 was measured at a condition of 50 mm/min by a 180 degrees peel measurement method using UTM equipment of LLOYD company. At the time of the measurement, the maximum value of the force applied up to the point in time when the film did not break was evaluated as the strength of the free-standing film, and the measurement results are shown in Table 2 below.

**Table 2:**

| | Example 1 | Example 2 | Comparative Example 1 | Comparative Example 2 |
|---|---|---|---|---|
| Tensile Strength (MPa) | 6.86 | 7.34 | 6.47 | 6.98 |

### Experimental Example 2: Evaluation of lifetime characteristic of battery

### (1) Manufacture of lithium secondary battery

The positive electrodes prepared in Examples 1 to 2 and Comparative Examples 1 to 2 were used, lithium metal was used as a counter electrode, and an electrolyte solution containing 1M LiPF₆ in a solvent containing EC:DMC:DEC (volume ratio of 1:2:1) was used, to manufacture a coin-type half-cell.

### (2) Evaluation of capacity retention rate of lithium secondary battery

After charging and discharging the coin-type half battery prepared above 100 times at 25 °C under the voltage range of 3 to 4.3 V and the current condition of 0.33 Crate, the retention rate of the 100^{th} discharging capacity compared to the 1^{st} discharging capacity was calculated, and the results are shown in Table 3 below

**Table 3:**

| | Example 1 | Example 2 | Comparati ve Example 1 | Comparati ve Example 2 |
|---|---|---|---|---|
| Capacity retention rate 0.33/0.33C, Room temperature life (Capa. Efficiency, %@100th cycle) | 98.5 | 97.7 | 96.8 | 96.1 |

Although the present invention has been described with reference to the above-mentioned preferred examples, various modifications and variations can be made without departing from the spirit and scope of the invention. Accordingly, the appended claims will cover such modifications and variations as long as they fall within the gist of the present invention.

### [Description of Symbols]

10: First screw kneader
10': Second screw kneader
13, 13': Shaft
15, 15': Blade
18,18': Through hole
20: Driving mechanism body
21: First rotation driving mechanism
21': Second rotation driving mechanism
23: Revolution driving mechanism
30: Mixing tank

## Claims

1. A high shear mixing device comprising,
a first screw kneader and a second screw kneader;
a first rotation driving mechanism for rotating the first screw kneader and a second rotation driving mechanism for rotating the second screw kneader;
a revolution driving mechanism in which the first rotation driving mechanism and the second rotation driving mechanism are rotatably installed;
a driving mechanism body in which the revolution driving mechanism is installed; and
a mixing tank,
wherein each of the first screw kneader and the second screw kneader comprises a shaft whose one end is connected to the rotation driving mechanism; and three blades having one end fixed to the shaft and having a body spirally curved along a longitudinal direction of the shaft, and
wherein each of screw kneaders rotates in opposite directions with the other screw kneaders and the blades overlapping each other,
wherein one of the three blades provided in each of the first screw kneader and the second screw kneader is an open-type blade having through holes formed in a center except for an outer periphery of a rotation direction surface, and the other two blades are both closed-type blades having a rotation direction surface closed without a through hole,
wherein the open-type blade provided in the first screw kneader is overlapped between the two closed-type blades provided in the second screw kneader, and wherein the open-type blade provided in the second screw kneader is overlapped between the two closed-type blades provided in the first screw kneader.

2. The high shear mixing device according to claim 1, wherein in the high shear mixing device, the screw kneaders rotate by the rotation driving mechanisms and revolve by the revolution driving mechanism.

3. The high shear mixing device according to claim 1, wherein each of the through holes formed in the blades is formed to extend to an outer peripheral surface of the shaft.

4. The high shear mixing device according to claims 1, wherein rotation direction distal ends of the blades provided in the first screw kneader and the second screw kneader rotate, while maintaining a separation distance of 1 mm to 10 mm from other screw kneaders.

5. The high shear mixing device according to claims 1, wherein it is used for micro-fiberization of a fiberizable polymer by high shear mixing a mixture for preparing a dry electrode containing the fiberizable polymer as a binder.
